# EUROPEAN PATENT SPECIFICATION

(11) **EP 3 611 094 B1**
(45) Date of publication and mention of the grant of the patent: **20.01.2021**
(21) Application number: 19184012.3
(22) Date of filing: 02.07.2019
(51) Int. Cl.: B64D 31/04, B64C 27/14, B64D 27/24, B64C 27/20, B64C 27/82, A63H 27/00, B64C 39/02, B64D 45/00

(54) **VARIABLE SPEED ROTOR WITH SLOW ROTATION MODE**
ROTOR MIT VARIABLER DREHZAHL UND LANGSAMEM ROTATIONSMODUS
ROTOR À VITESSE VARIABLE À MODE DE ROTATION LENTE

(30) Priority: 14.08.2018 US 201816103426; 07.06.2019 EP 19179200
(43) Date of publication of application: 19.02.2020
(73) Proprietor: Bell Helicopter Textron Inc., Fort Worth, TX 76101 (US)
(72) Inventor: SINUSAS, Eric Albert, Southlake, TX Texas 76092 (US)
(74) Representative: Barker Brettell LLP

(56) References cited:
- EP-A1- 3 251 952
- CA-A1- 2 969 663
- GB-A- 2 419 122
- US-A1- 2010 230 547
- US-A1- 2013 119 185

## Description

### BACKGROUND

This section provides background information to facilitate a better understanding of the various aspects of the disclosure. It should be understood that the statements in this section of this document are to be read in this light, and not as admissions of prior art.

When an aircraft is on the ground, personnel must perform various tasks in close proximity to the rotational path of rotors. Combustion engines drive rotors in conventional aircraft and the rotors cannot spin unless the engine is running. Through experience, personnel have been trained that it is safe to be in a rotor's rotational path when the rotor is not spinning and they do not hear an engine running.

Electrically powered vehicles present a danger not presented by combustion engine powered vehicles. If a rotor in an electric powered vehicle is stationary, there is no visual or audible indication that the rotor system is energized and that it can begin spinning unexpectedly and instantaneously. Unexpected energized motor start-up can occur for various reasons including an electrical short or inadvertent actuation of a switch.
EP 3 251 952 A1 discloses an anti-torque assembly system for a helicopter, comprising a plurality of fixed blade pitch electrically driven variable speed motors mounted on one or more pivots on the tail boom of the helicopter.
US 2010/0230547 A1 discloses a stop-rotor rotary wing aircraft comprising an electric drive system and a fuel-battery-electric hybrid propulsion system that allows the aircraft to fly covertly in a battery-electric quiet flight mode.
CA 2 969 663 A1 discloses an anti-torque control using a matrix of fixed blade pitch motor modules mounted on a tail boom of a helicopter, a speed of one or more of the motors being varied to provide an anti-torque thrust.
US 2013/0119185 A1 discloses a drive system for helicopters, in which the rotors of a helicopter are directly connected with electric high-torque motors, the high-torque motor of the main rotor being pivoted to the cabin canopy so that it can be tilted together with the main rotor.

### SUMMARY

In accordance with the invention there is provided an aircraft as defined by the appended claims.

### BRIEF DESCRIPTION OF THE DRAWINGS

The disclosure is best understood from the following detailed description when read with the accompanying figures. It is emphasized that, in accordance with standard practice in the industry, various features are not drawn to scale. In fact, the dimensions of various features may be arbitrarily increased or reduced for clarity of discussion.
**Figure 1** illustrates a vertical takeoff and landing aircraft incorporating a variable speed rotor with a slow rotation mode according to one or more aspects of the disclosure;
**Figure 2** illustrates another vertical takeoff and landing aircraft incorporating a variable speed rotor with a slow rotation mode according to one or more aspects of the disclosure;
**Figure 3** schematically illustrates a vehicle incorporating a variable speed rotor with a slow rotation mode according to one or more aspects of the disclosure;
**Figure 4** schematically illustrates an electrically distributed rotor aircraft incorporating variable speed rotors with slow rotation mode according to one or more aspects of the disclosure;
**Figure 5** illustrates a flowchart for an exemplary method of operating a variable speed rotor with a slow rotation mode according to one or more aspects of the disclosure; and
**Figure 6** schematically illustrates another electrically distributed rotor aircraft incorporating variable speed rotors with slow rotation mode according to one or more aspects of the disclosure.

### DETAILED DESCRIPTION

It is to be understood that the following disclosure provides many different embodiments, or examples, for implementing different features of various illustrative embodiments. Specific examples of components and arrangements are described below to simplify the disclosure. These are, of course, merely examples and are not intended to be limiting. For example, a figure may illustrate an exemplary embodiment with multiple features or combinations of features that are not required in one or more other embodiments and thus a figure may disclose one or more embodiments that have fewer features or a different combination of features than the illustrated embodiment. Therefore, combinations of features disclosed in the following detailed description may not be necessary to practice the teachings in the broadest sense and are instead merely to describe particularly representative examples. In addition, the disclosure may repeat reference numerals and/or letters in the various examples. This repetition is for the purpose of simplicity and clarity and does not itself dictate a relationship between the various embodiments and/or configurations discussed.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include such elements or features.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "inboard," "outboard, "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. As used herein, the terms "connect," "connection," "connected," "in connection with," and "connecting" may be used to mean in direct connection with or in connection with via one or more elements. Similarly, the terms "couple," "coupling," and "coupled" may be used to mean directly coupled or coupled via one or more elements.

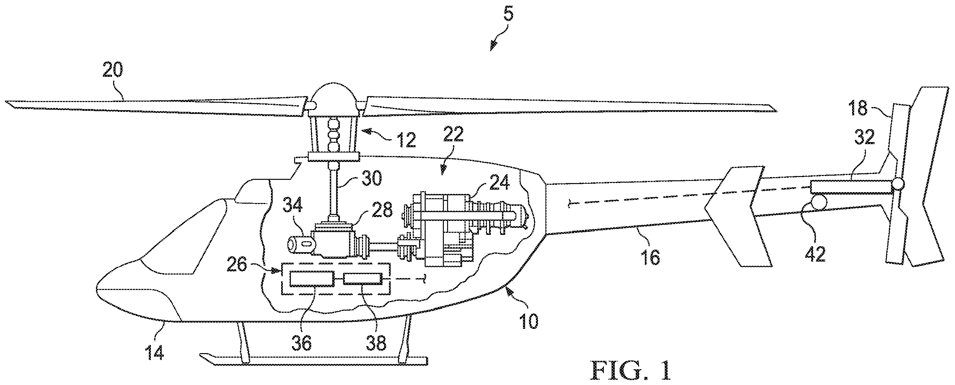

Figure 1 illustrates an exemplary vertical takeoff and landing (VTOL) aircraft 10 incorporating an electric powered variable speed rotor with a slow rotation system 5 according to an embodiment of the disclosure. VTOL aircraft 10 includes a rotor system 12, a fuselage 14, and a tail boom 16 carrying an anti-torque system represented by rotor 18. Rotor system 12 includes rotor 20 having multiple blades for creating flight. Rotor system 12 may include a control system for selectively controlling the pitch of each blade of rotor 20 to control direction, thrust, and lift of VTOL aircraft 10. Tail boom 16 may include one or more rotors 18. Rotor 18 may provide thrust in the same direction as the rotation of rotor blades 20 to counter the torque effect created by rotor system 12. Teachings of certain embodiments recognize that rotor 18 may represent one example of a rotor or anti-torque rotor; other examples include, but are not limited to, tail propellers, ducted tail rotors, and ducted fans mounted inside and/or outside the aircraft. The anti-torque system may include two or more rotors 18, such as in an electric distributed anti-torque system. Teachings of certain embodiments relating to rotors and rotor systems may apply to rotor system 12 and other rotor systems, such as electrically distributed rotors, tiltrotor, tilt-wing, and helicopter rotor systems. It should be appreciated that teachings herein apply to manned and unmanned vehicles and aircraft including without limitation airplanes, rotorcraft, hovercraft, helicopters, and rotary-wing vehicles.

An exemplary VTOL aircraft 10 incorporates a hybrid propulsion system 22 including a combustion engine 24 and an electric motor system 26. Combustion engine 24 is mechanically connected to a transmission 28 and transmission 28 is mechanically connected to rotor 20 through mast 30. In this example, electric motor system 26 includes an electric motor 32 mechanically connected to rotor 18, a generator 34 coupled to combustion engine 24 and electric motor 32, and a controller 36, e.g., an electronic speed controller. Electric motor system 26 may include one or more batteries 38.

Electric motor 32 may be controlled by controller 36 over a range of speeds in response to a pilot and/or flight control system. Controller 36 can include logic to control the rate of rotation of rotor 18 via electric motor 32. Controller 36 may be included for example in the motor controller or the flight computer, be a component of the motor controller or the flight computer, and/or be in communication with the motor controller or the flight computer. Electric motor system 26 may include one or more batteries 38.

Controller 36 can include logic to control the rate of rotation of rotor 18 via electric motor 32. Controller 36 ensures that rotor 18 rotates at least at a minimum rotation rate greater than zero when electric motor 32 is energized. For example, when VTOL aircraft 10 is landed, electric motor system 26 may remain energized. Controller 36 controls energized motor 32 to rotate rotor 18 at rotation rate that provides a visual indication and warning that rotor 18 is energized. In an exemplary embodiment, controller 36 controls energized motor 32 to always rotate rotor 18 at least at a minimum rotation rate, unless the slow rotation mode is manually overridden to stop the rotation. This default or safety rotation rate is referred to as a minimum rotation rate that is greater than zero. In an embodiment, the minimum rotation rate may be approximately 0.5 revolutions per minute (RPM) or less. The minimum rotation rate may be approximately 1 RPM. In an embodiment, the minimum rotation rate may be in a range of approximately 0.5 RPM and 3 RPM. In accordance to an embodiment, the minimum rotation rate may be approximately 5 RPM or less.

The minimum rotation rate can be overridden by a person actuating a manual override 42. With reference to Figure 1, slow rotation system 5 includes a manual override 42 represented by a switch located proximate to or adjacent the controlled rotor, rotor 18. Override switch 42 is located within reach of a person that is positioned in the rotation path of rotor 18 so that the person operating override switch 42 is aware that the rotor system is energized and the person in the rotation path is can override the minimum rotation to perform a task on the controlled rotor. For example, manual override switch 42 may be located approximately three feet or less from the rotor. In an embodiment, manual override switch 42 is located approximately three feet or less from the rotor as measured from center of the rotor. In an embodiment, manual override switch 42 is located within about two feet or less from the rotor. In an embodiment, manual override switch 42 is a push-button of switch requiring constant pressure to be maintained in the override position.

For ease of description, some of the required systems and devices operably associated with the present control system are not shown, i.e., sensors, connectors, power sources, mounting supports, circuitry, software, and so forth, in order to clearly depict the novel features of the system. However, it is understood that the system is operably associated with these and other required systems and devices for operation, as conventionally known in the art, although not shown in the drawings.

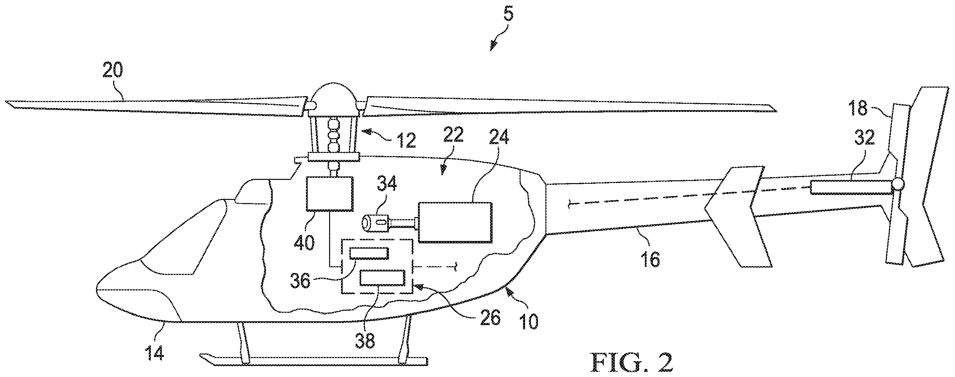

Figure 2 illustrates another exemplary VTOL aircraft 10 incorporating an electric powered variable speed rotor with a slow rotation system 5 according to aspects of the disclosure. Rotor 18 and rotor 20 are both driven by electric motors in this exemplary VTOL aircraft 10. Electric motor system 26 includes first electric motor 32 to drive rotor 18 and a second electric motor 40 to drive rotor 20. Combustion engine 24 may be operated intermittently to drive generator 34 and recharge batteries 38 and/or directly power electric motors 32, 40. Combustion engine 24 is not mechanically coupled to rotor system 12. In an all-electric embodiment, electric motors 32, 40 are powered by batteries 38 and VTOL aircraft 10 does not carry combustion engine 24 and generators 34.

Electric motors 32 and 40 can be controlled by controller 36 individually or by controllers 36 over a range of speeds in response to a pilot and/or flight control system. Controller 36 can include logic to control the rate of rotation of rotors 18, 20 via electric motors 32, 40. Controller 36 may be included for example in the motor controller or the flight computer, be a component of the motor controller or the flight computer, and/or be in communication with the motor controller or the flight computer.

Controller 36 ensures that rotors 18, 20 rotate at least at a minimum rotation rate greater than zero when electric motors 32, 40 are energized. When VTOL aircraft 10 is on the ground and motor 32 is energized by an electric power source, controller 36 controls the speed of motor 32 to rotate rotor 18 and provide a visual indication and warning that rotor 18 is energized. If motor 40 is energized, controller 36 controls the speed of motor 40 to rotate rotor 20 and provide a visual indication and warning that rotor 20 is energized. Controller 36 controls the energized motor to always rotate the associated rotor at least at a minimum rotation rate unless controller 36 is manually overridden to stop rotation.

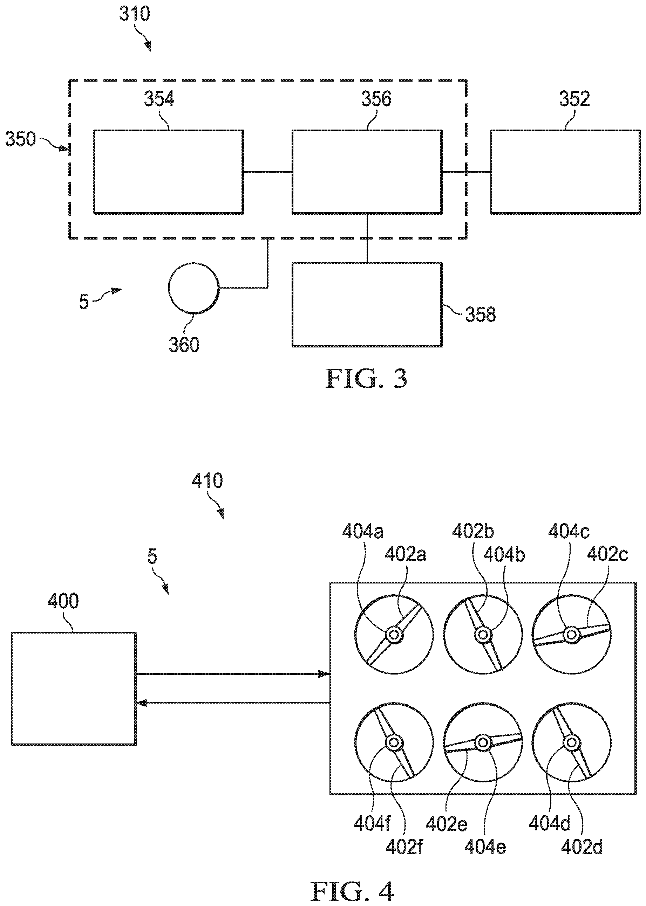

Figure 3 is a schematic illustration of an exemplary electric powered variable speed rotor with a slow rotation system 5 incorporated in a vehicle 310 according to aspects of the disclosure. Vehicle 310 includes an electric motor system 350 driving a variable speed rotor 352. Electric motor system 350 includes an electric power source 354 and an electric motor 356. Vehicle 310 may include two or more electric motors 356. Electric power source 354 may include a generator and/or batteries. In this example, electric motor 356 is a variable speed motor. Slow rotation system 5 includes a controller 358 electronically connected to motor 356. Controller 358 carries logic to control electric motor 356 to drive rotor 352 at least at a minimum rotation rate that is greater than zero when electric motor system 350 is energized. If electric motor system 350 is electrically energized, controller 358 controls the speed of electric motor 356 to rotate rotor 352 at a rotation rate that is greater than zero.

Slow rotation system 5 includes manual override 360 to stop rotation of the rotor. Manual override 360 is represented by a switch located physically adjacent or proximate to rotor 352 and electronically connected to electric motor system 350. Override switch 42 is located within reach of a person that is positioned in the rotation path of rotor 352 so that a person that needs to be in the rotation path of rotor 352, for example for maintenance, can override slow rotation system 5 and stop the rotor rotation. In an embodiment, override switch 360 is a push-button of switch requiring constant pressure to be maintained in the override position.

In an exemplary embodiment, vehicle 310 is a vertical takeoff and landing aircraft. Rotor 352 may be the main rotor (e.g., proprotor), an anti-torque rotor, or a push propeller or fan. An anti-torque rotor may include for example rotor blades, tail propellers, ducted tail rotors, and ducted fans mounted inside and/or outside the aircraft. A push propeller may provide a forward thrust in a cruise or transitional mode.

Figure 4 illustrates an exemplary variable speed rotor with slow rotation system 5 incorporated in an electric distributed rotor aircraft 410. Aircraft 410 includes a plurality of rotors generally denoted 402 and individually denoted 402a-402f. Each rotor 402 having an associated variable speed electric motor generally denoted 404 and individually denoted 404a-404f. Control logic 400 controls the speed of the one or more variable speed motors 404a-404f. Control logic 400 controls the speed of the variable speed motors to drive the rotors 402a-402f at least at a minimum rotation rate greater than zero in response to variable speed motors 404a-404f being energized. The minimum rotation rate or speed is less than a rotation rate at which the rotor produces thrust. In an embodiment, the minimum rotation rate may be approximately 0.5 revolutions per minute (RPM) or less. The rotation rate may be approximately 1 RPM. In an embodiment, the minimum rotation rate may be in a range of approximately 0.5 RPM and 3 RPM. In an embodiment, the minimum rotation rate may be approximately 5 RPM or less. The minimum rotation rate provides a visual indication that the rotor is turning and the electric motor is energized.

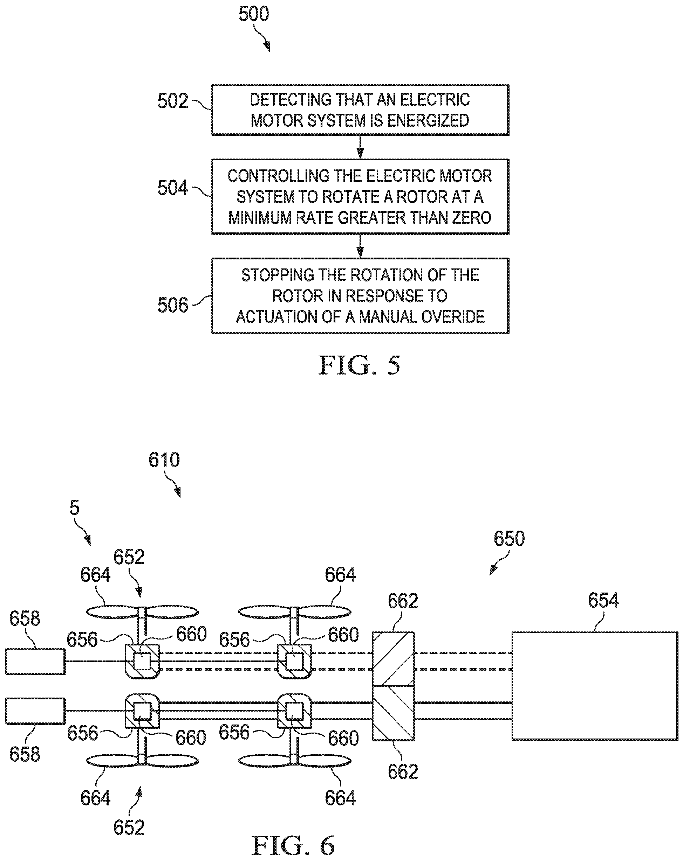

Figure 5 illustrates an exemplary logic 500 according to aspects of the disclosure. Logic 500 detects at block 502 if an electric motor system is energized. In response to detecting that the electric motor is energized, logic 500 controls the electric motor system, at block 504, to drive an associated rotor at least at a minimum rotation rate that is greater than zero. If the motor system is electrically energized, logic 500 controls the electric motor to drive the associated rotor to rotate at rotation rate that is greater than zero. Logic 500 stops the rotation of the rotor, at block 506, in response to actuation of a manual override, such as manual override 42 (FIG. 1) or manual override 360 (FIG. 3).

Figure 6 is a diagram of an exemplary VTOL aircraft 610 implementing a variable speed rotor with a slow rotation mode 5. Aircraft 610 includes an electric motor system 650 driving rotors 652. Each rotor 652 includes one or more blades 664. Rotors 652 are arranged in an electric distributed rotor matrix or system. In an exemplary embodiment, rotors 652 are arranged in an electric distributed anti-torque system. An anti-torque rotor may include for example rotor blades, fans, ducted tail rotors, and ducted fans mounted inside and/or outside the aircraft.

Electric motor system 650 includes an electric power source 654 and electric motors 656. In this example, electric motor 656 is a variable speed motor and each electric motor has an individual speed control 660. Electric power source 654 and motors 656 are connected to controllers 658, which can be the flight control computer, and a power management unit 662. Controller 658 carries logic, e.g., logic 500 (FIG. 5), to control electric motors 656 to drive rotors 652 at least at a minimum rotation rate that is greater than zero when electric motor system 650 is energized.

It will be appreciated that the minimum rotation rate mode of operation of the rotor (or rotors), whether that be main drive rotors and/or anti-torque rotors, is employed when the vehicle or aircraft is on the ground.

The vehicle/aircraft has a flight mode of operation of its rotors and a slow rotation mode of operation of its rotors (the minimum rotation rate mode) which is operational when the vehicle/aircraft is on the ground. The slow rotation mode is applied when the vehicle/aircraft is on the ground and when the electric rotor system is engaged a safety feature for personnel in the vicinity of the vehicle/aircraft. The slow rotation mode is applied automatically by a controller,

The term "approximately" is defined as largely but not necessarily wholly what is specified (and includes what is specified; e.g., approximately 90 degrees includes 90 degrees and approximately parallel includes parallel), as understood by a person of ordinary skill in the art. In any disclosed embodiment, the terms "substantially," "approximately," "generally," and "about" may be substituted with "within [a percentage] of' what is specified, where the percentage may include for example 0.1, 1, and 5 percent as may be recognized by a person skilled in the art.

The foregoing outlines features of several embodiments so that those skilled in the art may better understand the aspects of the disclosure.

The scope of the invention should be determined only by the language of the claims that follow. The term "comprising" within the claims is intended to mean "including at least" such that the recited listing of elements in a claim are an open group. The terms "a," "an" and other singular terms are intended to include the plural forms thereof unless specifically excluded.

## Claims

1. An aircraft (10), comprising:
an electric motor system (26) including an electric motor (32) coupled to a rotor (18); and
a system (5) connected to the electric motor (32) to drive the rotor (18) when the electric motor system (26) is energized at least at a minimum rotation rate greater than zero, **characterized in that** the system (5) comprising a controller (36) configured to control the electric motor (32) to rotate the rotor (18) at a rotation rate that provides a visual indication and warning that the rotor (18) is energized, the system (5) comprising a manual override switch (42) located proximate to the rotor (18), the manual override switch (42) configured to stop the rotation of the rotor (18).

2. The aircraft (10) of claim 1, wherein the rotor (18) is an anti-torque rotor.

3. The aircraft (10) of claim 1, wherein the rotor (18) is an anti-torque rotor arranged in an electric anti-torque distributed system.

4. The aircraft (10) of claim 1, wherein:-
(i) the aircraft (10) is a helicopter and the rotor is a main rotor (20); or
(ii) the rotor is a push propeller.

5. The aircraft (10) of claim 1, wherein the rotor is arranged in an electric distributed rotor system.

6. The aircraft (10) of any preceding claim, wherein the minimum rotation rate is less than 5 RPM.

7. The aircraft (10) of any preceding claim, wherein the electric motor system (26) is arranged to drive the rotor (18) at the minimum rotation rate when the aircraft (10) is on the ground.

## Patentansprüche

1. Luftfahrzeug (10), das umfasst:
ein Elektromotorsystem (26), das einen Elektromotor (32), der mit einem Rotor (18) gekoppelt ist, beinhaltet; und
ein System (5), das mit dem Elektromotor (32) verbunden ist, um den Rotor (18), wenn das Elektromotorsystem (26) bestromt wird, mit einer Mindestrotationsgeschwindigkeit, die größer ist als null, anzutreiben, **dadurch gekennzeichnet, dass** das System (5) eine Steuereinrichtung (36) umfasst, die dazu konfiguriert ist, den Elektromotor (32) zum Drehen des Rotors (18) mit einer Rotationsgeschwindigkeit zu steuern, die eine visuelle Angabe und Warnung, dass der Rotor (18) bestromt ist, bereitstellt, wobei das System (5) einen manuellen Override-Schalter (42) umfasst, der sich nahe dem Rotor (18) befindet, wobei der manuelle Override-Schalter (42) dazu konfiguriert ist, die Drehung des Rotors (18) zu stoppen.

2. Luftfahrzeug (10) nach Anspruch 1, wobei der Rotor (18) ein Gegendrehmomentrotor ist.

3. Luftfahrzeug (10) nach Anspruch 1, wobei der Rotor (18) ein Gegendrehmomentrotor ist, der in einem verteilten elektrischen Gegendrehmomentsystem eingerichtet ist.

4. Luftfahrzeug (10) nach Anspruch 1, wobei:
(i) das Luftfahrzeug (10) ein Hubschrauber ist und der Rotor ein Hauptrotor (20) ist; oder
(ii) der Rotor ein Druckpropeller ist.

5. Luftfahrzeug (10) nach Anspruch 1, wobei der Rotor in einem verteilten elektrischen Rotorsystem eingerichtet ist.

6. Luftfahrzeug (10) nach einem vorstehenden Anspruch, wobei die Mindestrotationsgeschwindigkeit 5 U/Min. beträgt.

7. Luftfahrzeug (10) nach einem vorstehenden Anspruch, wobei das Elektromotorsystem (26) eingerichtet ist, um den Rotor (18) mit einer Mindestrotationsgeschwindigkeit anzutreiben, wenn sich das Luftfahrzeug (10) auf dem Boden befindet.

## Revendications

1. Aéronef (10), comprenant:
un système de moteur électrique (26) incluant un moteur électrique (32) couplé à un rotor (18) ; et
un système (5) relié au moteur électrique (32) pour entraîner le rotor (18) lorsque le système de moteur électrique (26) est sous tension au moins à une vitesse de rotation minimale supérieure à zéro, **caractérisé en ce que** le système (5) comprend un organe de commande (36) configuré pour commander au moteur électrique (32) de faire tourner le rotor (18) à une vitesse de rotation qui fournit une indication visuelle et un avertissement que le rotor (18) est sous tension, le système (5) comprenant un commutateur de prise de commande manuelle (42) situé à proximité du rotor (18), le commutateur de prise de commande manuelle (42) étant configuré pour arrêter la rotation du rotor (18).

2. Aéronef (10) selon la revendication 1, dans lequel le rotor (18) est un rotor anti-couple.

3. Aéronef (10) selon la revendication 1, dans lequel le rotor (18) est un rotor anti-couple agencé dans un système distribué anti-couple électrique.

4. Aéronef (10) selon la revendication 1, dans lequel :
(i) l'aéronef (10) est un hélicoptère et le rotor est un rotor principal (20) ; ou
(ii) le rotor est une hélice à pousser.

5. Aéronef (10) selon la revendication 1, dans lequel le rotor est agencé dans un système de rotor distribué électrique.

6. Aéronef (10) selon une quelconque revendication précédente, dans lequel la vitesse de rotation minimale est inférieure à 5 tours/minute.

7. Aéronef (10) selon une quelconque revendication précédente, dans lequel le système de moteur électrique (26) est agencé pour entraîner le rotor (18) à la vitesse de rotation minimale lorsque l'aéronef (10) est au sol.
